# EUROPÄISCHE PATENTSCHRIFT

(11) **EP 4 658 456 B1**
(45) Veröffentlichungstag und Bekanntmachung des Hinweises auf die Patenterteilung: **13.05.2026**
(21) Anmeldenummer: 24707767.0
(22) Anmeldetag: 27.02.2024
(51) Int. Cl.: B25J 19/02, B25J 13/08, B25J 19/00

(54) **FÜHRUNGSVORRICHTUNG ZUR FÜHRUNG VON ZUMINDEST EINER IN EINEM SCHUTZSCHLAUCH EINLIEGENDEN LEITUNG MIT EINER SENSOREINRICHTUNG MIT ULRASCHALL-SENDER, SOWIE NACHRÜSTSET UND VERFAHREN ZUR ÜBERWACHUNG DER BEWEGUNG EINES SOLCHEN SCHUTZSCHLAUCHES**
GUIDE DEVICE FOR GUIDING AT LEAST ONE LINE WHICH IS LAID IN A PROTECTIVE TUBE, COMPRISING A SENSOR DEVICE WITH AN ULTRASONIC TRANSMITTER, AND RETROFIT SET AND METHOD FOR MONITORING THE MOVEMENT OF SUCH A PROTECTIVE TUBE
DISPOSITIF DE GUIDAGE POUR GUIDER AU MOINS UNE CONDUITE QUI EST POSÉE DANS UN TUBE DE PROTECTION, COMPRENANT UN DISPOSITIF CAPTEUR DOTÉ D'UN ÉMETTEUR ULTRASONORE, ET ENSEMBLE DE MODERNISATION ET PROCÉDÉ DE SURVEILLANCE DU MOUVEMENT D'UN TEL TUBE DE PROTECTION

(30) Priorität: 28.02.2023 DE 102023201837; 24.11.2023 DE 102023211749
(43) Veröffentlichungstag der Anmeldung: 10.12.2025
(73) Patentinhaber: BizLink Industry Germany GmbH, 91154 Roth (DE)
(72) Erfinder: KABIR, Asraful, 30459 Hannover (DE); LIN, Wei, 30625 Hannover (DE); OEZEL, Fatih, 30419 Hannover (DE)
(74) Vertreter: FDST Patentanwälte
(86) Internationale Anmeldenummer: PCT/EP2024/054916
(87) Internationale Veröffentlichungsnummer: WO 2024/180039

(56) Entgegenhaltungen:
- EP-B1- 2 956 277
- EP-B1- 3 768 471
- DE-A1- 102019 108 152
- DE-A1- 102019 204 618

## Beschreibung

Die Erfindung betrifft eine Führungsvorrichtung zur Führung von zumindest einer in einem Schutzschlauch einliegenden Leitung sowie ein Nachrüstset und ein Verfahren zur Überwachung der Bewegung eines solchen Schutzschlauches.

Die Führungsvorrichtung dient insbesondere zur Führung eines sogenannten Schlauchpakets bei einem mehrachsigen Gelenkarmroboter, insbesondere bei einem mehrachsigen Industrieroboter. Bei den heute eingesetzten mehrachsigen Industrierobotern werden dem vordersten, auch als Roboterhand bezeichneten Gelenkarm üblicherweise mehrere einzelne Leitungen zur Versorgung eines an der Roboterhand angeordneten Werkzeugs, beispielsweise ein Schweißwerkzeug, zugeführt. Die Leitungen sind beispielsweise elektrische Versorgungskabel, elektrische Steuerkabel, Datenkabel sowie Medienführungen für Gase oder Flüssigkeiten. Diese Leitungen werden in einem sogenannten Schlauchpaket zusammengefasst und sind in einem Schutzschlauch üblicherweise lose einliegend geführt. Ein derartiges Schlauchpaket ist zum einen wegen der Relativbewegungen der Gelenkarme zueinander und insbesondere auch wegen der oftmals widrigen Umgebungsbedingungen (hohe Temperaturen, aggressive Medien, wie Schweißspritzer, etc.) hohen Belastungen ausgesetzt. Speziell ist der Schutzschlauch einer hohen Beanspruchung ausgesetzt. Als Schutzschlauch wird häufig ein sogenanntes Wellrohr eingesetzt.

Um eine zuverlässige Führung des Schlauchpakets zu ermöglichen, wird üblicherweise eine Führungsvorrichtung mit einer Rückstellmechanik eingesetzt, welche derart beschaffen ist, dass eine Ausgleichsbewegung des Schlauchpakets bei einer Relativbewegung zwischen zwei Gelenkarmen ermöglicht ist. Eine solche Führungsvorrichtung bei einem Industrieroboter ist beispielsweise aus der EP 2 956 277 A1 zu entnehmen.

Die hohen Beanspruchungen des Schutzschlauches können zu einer Beschädigung des Schutzschlauches führen, sodass dessen Schutzwirkung beeinträchtigt wird. Wird ein beschädigter Schutzschlauch nicht rechtzeitig ausgetauscht oder repariert, so kann dies zu einem Ausfall der im Schutzschlauch geführten Leitungen führen und es kann zu einem Ausfall und einem Stillstand kommen. In hochautomatisierten Fertigungsanlagen und in industrieller Umgebung kann häufig ein schadhafter Schutzschlauch nicht rechtzeitig erkannt werden, da die Zugänglichkeit für beispielsweise eine optische Sichtkontrolle nicht oder nur bedingt gegeben ist.

In der zum Anmeldezeitpunkt unveröffentlichten DE 10 2023 201 837 wird ein Verfahren zur Überwachung der Bewegung eins Schutzschlauches mit Hilfe einer Sensoreinrichtung beschrieben.

Aus EP 3 768 471 B1 ist ein Verfahren zur Überwachung eines Versorgungssystems eines Roboters zu entnehmen, bei dem in einem zu überwachenden Versorgungsstrang ein durch ein Leitungselement des Versorgungsstrangs ausgebildeter Sensor angeordnet ist und in den Sensor ein spezielles Messsignal eingespeist und ausgewertet wird. Ergänzend ist noch ein zusätzlicher externen Sensor angeordnet, welcher die Bewegung einer Ausgleichsmechanik des Versorgungssystems erfasst.

DE 10 2019 108 152 A1 beschreibt eine Rückführvorrichtung für einen Schlauch eines Roboters mit einem Gehäuse, in dem eine Laser-Messvorrichtung angeordnet ist, über die eine Abstandsmessung vom Gehäuse zu einem am Schlauch befestigten Verbindungselement durchgeführt wird.

Ausgehend hiervon liegt der Erfindung die Aufgabe zugrunde, eine solche Sensoreinrichtung kostengünstig und zugleich zuverlässig auszugestalten.

Die Aufgabe wird gemäß der Erfindung gelöst durch eine Führungsvorrichtung mit den Merkmalen des Anspruchs 1, durch ein Nachrüstset zur Ausbildung einer solchen Führungsvorrichtung sowie durch ein Verfahren mit den Merkmalen des Anspruchs 15. Die im Hinblick auf die Führungsvorrichtung angeführten Vorteile und bevorzugten Ausgestaltungen lassen sich sinngemäß auch auf das Nachrüstset sowie auf das Verfahren und umgekehrt übertragen.

Die Führungsvorrichtung dient allgemein zur Führung von zumindest einer in einem Schutzschlauch einliegenden Leitung und zwar insbesondere einer Leitung eines mehrachsigen Gelenkarmroboters, speziell eines mehrachsigen Industrieroboters, an dem die Führungsvorrichtung im Betrieb befestigt ist. Allgemein ist die Führungsvorrichtung im montierten Zustand an einer Bearbeitungsmaschine befestigt, die zumindest zwei zueinander bewegliche Maschinenteile aufweist. Die zumindest eine Leitung, vorzugsweise mehrere Leitungen, und der Schutzschlauch bilden ein Schlauchpaket. Die Leitung und der Schutzschlauch sind nicht zwingend, jedoch bevorzugt Teil der Führungsvorrichtung. Im montierten Zustand sowie im Betrieb ist der Schutzschlauch an der Führungsvorrichtung montiert und zumindest dann Teil der Führungsvorrichtung.

Die Führungsvorrichtung weist eine sich in einer Längsrichtung erstreckende Führungseinheit auf, welche ein Befestigungselement umfasst, an der im Betrieb der Schutzschlauch befestigt ist. Weiterhin umfasst die Führungseinheit einen ortsfesten Träger, welcher bevorzugt im montierten Zustand am Gelenkarmroboter ortsfest fixiert ist. Bei der Führungseinheit handelt es sich insbesondere um eine eigenständige, kompakte Baueinheit, welche als solche an einer Maschine, insbesondere am Gelenkarmroboter, beispielsweise mittels des Trägers montierbar ist. Beispielsweise ist der Träger eine Grundplatte eines Trägergehäuses der Führungseinheit. Grundsätzlich besteht auch die Möglichkeit, dass der Träger selbst Teil der Maschine ist. Bei der Führungseinheit handelt es sich beispielsweise um eine bekannte Führungseinheit, wie sie beispielsweise in der eingangs genannten EP 2 956 277 A1 beschrieben ist.

Im Betrieb wird der am Befestigungselement befestigte Schutzschlauch entlang des Trägers relativ zu diesem verfahren. Das Befestigungselement ist am Träger und entlang des Trägers in einer Längsrichtung verschieblich gelagert. Dies dient insbesondere dazu, eine Ausgleichsbewegung des Schutzschlauches sowie der darin geführten zumindest einen Leitung im Betrieb zu ermöglichen.

Weiterhin weist die Führungsvorrichtung eine Sensoreinrichtung auf, die zur Messung der Bewegung des Befestigungselements relativ zum Träger ausgebildet ist. Bevorzugt werden hierdurch im Betrieb Bewegungsdaten, insbesondere Bewegungsmuster des Schutzschlauches erfasst.

Die Sensoreinrichtung dient also insbesondere dazu und ist dazu ausgebildet, im Betrieb bei montiertem Schutzschlauch die Bewegung des Schutzschlauches zumindest mittelbar zu messen und dadurch Bewegungsdaten des Schutzschlauches zu erfassen.

Die Sensoreinrichtung weist einen als Ultraschall-Sender ausgebildeten Sender als ein erstes Sensorbauteil auf, welcher zur Abgabe eines Ultraschall-Sensorsignals ausgebildet ist. In Längsrichtung gegenüberliegend hierzu ist ein zweites Sensorbauteil angebracht. Im Betrieb wird das Sensorsignal vom Sender zum zweiten Sensorbauteil und damit entlang einer sich in Längsrichtung erstreckenden Signalstrecke übermittelt. Sender und zweites Sensorbauteil sind einerseits mit dem ortsfesten Träger und andererseits mit dem beweglichen Befestigungselement zumindest mittelbar verbunden, sodass der Sender und das zweite Sensorbauteil eine Relativbewegung zueinander ausführen können, die einer Relativbewegung zwischen dem Befestigungselement und dem Träger im Betrieb des Gelenkarmroboters entspricht.

Um eine zuverlässige Messung mit einer ausreichenden Signalintensität durchführen zu können ist erfindungsgemäß seitlich neben der Signalstrecke eine Reflektorfläche für das Sensorsignal angeordnet. Diese ist derart ausgebildet und angeordnet, dass im Betrieb zumindest ein Teil des Sensorsignals auf dem Weg vom Sender zum zweiten Sensorbauteil an der Reflektorfläche reflektiert wird.

Bevorzugt handelt es sich bei den zweiten Sensorbauteil um einen Reflektor, welcher das Sensorsignal reflektiert und wieder in Richtung zum Sender zurückwirft. Am Ort des Senders ist daher bei dieser Ausführungsvariante bevorzugt weiterhin ein Empfänger für das (reflektierte) Ultraschall-Sensorsignal angeordnet. Sender und Empfänger können insbesondere eine gemeinsame Baueinheit bilden. Bei dem Reflektor handelt es sich beispielsweise um eine Platte mit einer reflektierenden Oberfläche, insbesondere um eine metallische Platte oder um eine Platte aus einem Polymer.

Alternativ zu dieser Ausführungsvariante besteht auch die Möglichkeit, dass das zweite Sensorbauteil als der Empfänger ausgebildet ist. Bevorzugt ist jedoch die Variante mit dem Reflektor.

In bevorzugter Ausgestaltung ist der Sender und insbesondere die gemeinsame Baueinheit mit Sender und Empfänger ortsfest mit dem Träger verbunden und der Reflektor ist an dem beweglichen Befestigungselement angebracht. Durch diese Maßnahme ist lediglich der passive Reflektor ortsbeweglich und die aktiven Bauteile der Sensoreinrichtung, die insbesondere über elektrische Leitungen angeschlossen sind, sind ortsfest angebracht.

Diese Ausgestaltung mit der seitlichen Reflektorfläche beruht auf der Überlegung, dass Ultraschall-Sender, insbesondere solche mit einem vertretbaren Kostenaufwand, in der Regel einen vergleichsweise großen Abstrahlwinkel aufweisen. Dieser erfordert für eine zuverlässige Signalerfassung eine große Sensorfläche am zweiten Sensorbauteil. Bei einer solchen Führungsvorrichtung insbesondere an einem Industrieroboter kommt es jedoch auf eine möglichst kompakte und platzsparende Anordnung an, um Störkonturen am Roboter möglichst gering zu halten. Von daher besteht die Anforderung, dass die Sensoreinrichtung möglichst kompakt bauend ausgebildet ist, sodass keine ausreichende Größe für dies Sensorfläche zur Verfügung steht. Es kann daher nur eine kleine Sensorfläche eingesetzt werden, wodurch die Gefahr besteht, dass ein Teil des Sensorsignals am Reflektor nicht reflektiert wird und/oder nicht bis zum Empfänger gelangt. Hierdurch ist eine zuverlässige Auswertung des Ultraschall-Sensorsignals zumindest erschwert. Durch die Anordnung der Reflektorfläche seitlich neben der Signalstrecke wird erreicht, dass zumindest ein Teil des Sensorsignals an dieser Reflektorfläche reflektiert wird und der am Reflektor reflektierte bzw. der am Empfänger ankommende Signalanteil im Vergleich zu einer Variante ohne Reflektorfläche erhöht ist.

Die Reflektorfläche ist dabei vorzugsweise unmittelbar neben der Signalstrecke angeordnet. Die Signalstrecke wird vorliegend allgemein durch eine sich in Längsrichtung erstreckende Verbindungslinie zwischen dem Sender (genauer einen Mittelpunkt des Senders) und dem zweiten Sensorbauteil definiert. Die Reflektorfläche ist wenige Zentimeter, insbesondere wenige Millimeter, neben der Signalstrecke und damit neben einer solchen Verbindungslinie angeordnet, beispielsweise beträgt der seitliche Abstand zur Verbindungslinie lediglich maximal 5 cm, vorzugsweise lediglich maximal 1 cm, insbesondere lediglich maximal 8 mm, im Speziellen lediglich maximal 5 mm. Ein Mindestabstand beträgt beispielsweise 3 mm.

In bevorzugter Ausgestaltung ist gegenüberliegend zur Reflektorfläche ein nicht reflektierender Bereich ausgebildet und zwar derart, dass ein an der Reflektorfläche reflektierter Teil nicht mehrfach reflektiert wird. Es werden daher bewusst Verluste in Kauf genommen. Dies beruht auf der Überlegung, dass Mehrfachreflexionen zu einer Beeinträchtigung der Auswertung des am Empfänger gemessenen Sensorsignals führen würden.

Bevorzugt ist die Sensoreinrichtung innerhalb eines Sensorgehäuses integriert, welches neben dem Träger angeordnet ist. Das Sensorgehäuse weist eine Innenseite auf, die die Reflektorfläche ausbildet. Durch das Sensorgehäuse ist die Sensoreinrichtung insgesamt vor Umgebungseinflüssen besser geschützt.

Das Sensorgehäuse weist an der der Reflektorfläche gegenüberliegenden Seite bevorzugt zumindest eine Öffnung auf oder ist dort komplett offen. Die Öffnung erstreckt sich dabei insbesondere über die gesamte maximale Länge zwischen Sender und dem zweiten Sensorbauteil. Die Öffnung ist zumindest ausreichend groß dimensioniert, um die Mehrfachreflexion wie zuvor beschrieben zu verhindern oder zumindest deutlich zu reduzieren im Vergleich zu einer geschlossenen Ausgestaltung des Sensorgehäuses.

Die Öffnung weist dabei bevorzugt eine Öffnungsbreite auf, die zumindest 10 %, weiter bevorzugt zumindest 20 % und weiter vorzugsweise zumindest 50 % der Breite des Sensorgehäuses (der Gehäuseseite, an der die Öffnung ausgebildet ist) beträgt. Gemäß einer Ausführungsvariante entspricht die Öffnungsbreite der Breite des Sensorgehäuses.

Das gesamte Sensorgehäuse ist im Querschnitt bevorzugt rechteckförmig und beispielsweise quadratisch ausgebildet. Es weist beispielsweise eine Breite von 4 cm bis 8 cm an der Gehäuseseite auf, an der die Öffnung ausgebildet ist.

Alternativ oder ergänzend weist die Öffnung eine Öffnungsbreite von zumindest 15 mm oder von zumindest 25 mm auf.

Das zweite Sensorbauteil ist bevorzugt über ein Verbindungselement mit dem Befestigungselement der Führungseinheit verbunden, wobei das Verbindungselement durch die Öffnung hindurchgeführt ist. Die Öffnungsbreite ist bevorzugt größer als eine Dicke des Verbindungselements gewählt, so dass zwischen der Öffnung und dem Verbindungselement ein freier Öffnungsspalt ausgebildet ist. Die Öffnungsbreite ist daher aus Gründen der Signalführung vergleichsweise groß gewählt. Dabei wird bewusst in Kauf genommen, dass durch die vergleichsweise breite Öffnung der Schutz des Innenraums des Sensorgehäuses zur Umgebung hin und damit vor Umgebungseinflüssen verringert ist.

Die Öffnungsbreite beträgt insbesondere ein Mehrfaches, beispielsweise zumindest das 2-fache, oder zumindest das 3-fache oder auch zumindest das 5-fache einer Dicke des Verbindungselements. Der Öffnungsspalt, also die Differenz zwischen Dicke des Verbindungselements und der Öffnungsbreite, beträgt bevorzugt mehr als 15 mm.

Im Hinblick auf eine möglichst gute Reflexion ist ein Abstand des zweiten Sensorbauteils zur Reflektorfläche klein gewählt und beträgt insbesondere nur wenige mm. Bevorzugt ist der Abstand kleiner als 8 mm, insbesondere kleiner als 5 mm und weiter bevorzugt kleiner als 3 mm.

Alternativ oder auch ergänzend zu einer solchen Öffnung weist das Sensorgehäuse zumindest an der der Reflektorfläche gegenüberliegenden Seite eine das Sensorsignal absorbierende Oberfläche auf. Ergänzend können auch weitere Wandbereiche, die an die Innenseite mit der Reflektorfläche angrenzen, mit einer solchen absorbierenden Oberfläche versehen sein. Bei dieser Ausführungsvariante sind die Innenseiten des Sensorgehäuses daher unterschiedlich ausgebildet. Während ein Innenwandbereich die Reflektorfläche bildet, bilden andere Innenwandbereiche Absorptionsflächen aus.

Für die Ausbildung der das Sensorsignal absorbierenden Oberfläche ist diese, bzw. sind die entsprechenden Wandbereiche geeignet ausgebildet und sind beispielsweise mit einer Verkleidung aus einem geeigneten Schall absorbierenden Material, wie beispielsweise ein Vlies oder Schaumstoff, versehen.

Die Reflektorfläche ist bevorzugt durch das Material des Sensorgehäuses selbst gebildet. Hierbei handelt es sich bevorzugt um ein Metall, insbesondere um Aluminium. Das Sensorgehäuse ist beispielsweise als ein Stranggussprofil ausgebildet, welches an seinen gegenüberliegenden Stirn-Endseiten vorzugsweise verschlossen ist.

Der Träger der Führungseinheit weist vorzugsweise ein Trägergehäuse auf oder er ist mit einem Trägergehäuse verbindbar. Innerhalb des Trägergehäuses ist üblicherweise eine Rückstellmechanik aufgenommen und liegt in dem Trägergehäuse geschützt ein. Die Sensoreinrichtung ist allgemein neben dem Träger und damit auch neben dem Trägergehäuse, insbesondere außerhalb des Trägergehäuses, angeordnet.

Insbesondere bei einer zur Ausgestaltung mit dem Sensorgehäuse alternativen Ausführungsvariante ist eine Außenwand des Trägergehäuses als die Reflektorfläche ausgebildet. Bei dieser Variante ist daher die Sensoreinrichtung nicht in dem separaten, davon getrennten Sensorgehäuse eingehaust, vielmehr sind der Sender und das zweite Sensorbauteil unmittelbar benachbart zu dem Trägergehäuse angeordnet und zumindest ein Teilbereich von diesem ist als die Reflektorfläche ausgebildet. Zweckdienlicherweise ist lediglich ein Teilbereich des Trägergehäuses als die Reflektorfläche ausgebildet, insbesondere durch eine geeignete Ausgestaltung der Oberfläche des Trägergehäuses. Die anderen Oberflächenbereiche des Trägergehäuses sind beispielsweise hierzu verschieden ausgebildet.

Der Sender weist bevorzugt einen Abstrahlwinkel für das Sensorsignal auf, welcher größer-gleich 20° oder größer-gleich 30° ist und vorzugsweise maximal 50° beträgt. Insbesondere liegt der Abstrahlwinkel im Bereich zwischen 25° und 35°. Der Ultraschall-Sender gibt allgemein das Ultraschallsignal in einen kegelförmigen Raumbereich (Abstrahlkegel) ab. Unter Abstrahlwinkel wird vorliegend der Kegelwinkel (Öffnungswinkel) eines solchen Abstrahlkegels verstanden, also der Winkel, den die Mantelfläche des Abstrahlkegels zwischen sich einschließt.

Bevorzugt liegt der Abstand zwischen dem Sender und dem zweiten Sensorbauteil maximal bei 45 cm, bevorzugt maximal 40 cm und weiter bevorzugt maximal bei 35 cm. Dieser Abstand entspricht dabei insbesondere dem Verfahrweg des Befestigungselements. Der Sender und das zweite Sensorbauteil sind daher insbesondere derart zueinander angebracht, dass ihr maximaler Abstand dem maximale Verfahrweg zumindest im Wesentlichen (+/-5 cm) entspricht. Durch die Relativbewegung zwischen Träger und Befestigungselement variiert dieser Abstand im Betrieb.

Weiterhin weist das zweite Sensorbauteil und damit insbesondere der Reflektor eine Sensorfläche auf, welche kleiner 25 cm², insbesondere kleiner 15 cm² und weiter bevorzugt kleiner 10 cm² ist. Die Sensorfläche ist insbesondere rechteckförmig ausgebildet. Durch diese kleine Sensorfläche ist insgesamt eine möglichst kompaktbauende Sensoreinrichtung erreicht. Die Größe des Reflektors entspricht insbesondere der Größe der Sensorfläche, er ist also insbesondere durch die Sensorfläche gebildet.

Insgesamt ist durch die hier beschriebenen Abmessungen eine zuverlässige Messung und Auswertung des Ultraschall-Sensorsignals erreicht.

Im Betrieb kann daher zuverlässig der Bewegungsablauf des Befestigungselements relativ zum Träger und damit der Bewegungsablauf eines Schutzschlauches erfasst und ausgewertet werden.

Anhand des erfassten Bewegungsablaufs wird durch geeignete Auswertung überprüft, ob der Schutzschlauch beschädigt ist. Alternativ oder ergänzend wird überprüft, ob eine Störung im Bewegungsablauf der Führungseinheit insgesamt vorliegt. Speziell kann ergänzend oder weiter alternativ auch geprüft werden, ob eine Änderung eines Bewegungsmusters der Führungseinheit vorliegt, beispielsweise in Folge einer geänderten Prozesseinstellung. Die Art und Weise der Überprüfung und Auswertung wird in der eingangs erwähnten DE 10 2023 201 837 beschrieben.

Das erfindungsgemäße Nachrüstset weist eine solche Sensoreinrichtung auf, die zur Montage an einer (bestehenden) Führungseinheit ausgebildet ist. Durch das Nachrüstset können daher auch bestehende Anlagen in einfacher Weise nachgerüstet werden.

Speziell handelt es sich bei dem Nachrüstset um eine Baueinheit, die als solche an der Führungseinheit und/oder am Gelenkarmroboter montiert werden kann. Hierzu weist die Baueinheit Montageelemente zur Befestigung auf. Insbesondere handelt es sich hierbei um Schrauben, Klemmen usw.. In bevorzugter Ausbildung handelt es sich bei den Montagelementen um solche, die eine werkzeuglose Befestigung ermöglichen. Insbesondere handelt es sich bei diesen um Magnete, so dass die Sensoreinrichtung insbesondere ausschließlich durch Magnete an dem Gelenkarmroboter und speziell an der Führungseinheit befestigt wird.

Bei der Ausführungsvariante mit dem Sensorgehäuse umfasst das Nachrüstset insbesondere auch das Sensorgehäuse mit den darin angeordneten Komponenten, insbesondere den Sender und das zweite Sensorbauteil.

Die Führungseinheit weist allgemein eine Rückstellmechanik auf, welche für eine automatische, insbesondere federkraftbetätigte Rückholung des Befestigungselements und damit des Schutzschlauches in eine Ausgangsposition ausgebildet ist. Die federkraftbetätigte Rückstellmechanik übt dabei insbesondere eine Vorspannung auf den Schutzschlauch, speziell über das Befestigungselement aus. Eine Auslenkung des Schlauchpakets aus der Ausgangsposition erfolgt durch eine Zwangsbewegung der Bearbeitungsmaschine, speziell des Gelenkarmroboters, also beispielsweise bei einer zwangsgesteuerten Bewegung der Roboterhand, an der die zumindest eine Leitung befestigt ist. Diese Rückholungsmechanik ist dabei insbesondere auf dem Träger befestigt.

Das Befestigungselement umfasst weiterhin ein Schieberelement, auf das die Rückstellmechanik die Rückstellkraft ausübt. Bei dem Schieberelement handelt es sich insbesondere um einen Schlitten, welcher entlang einer Führung, insbesondere einer Linearführung geführt ist.

Die Rückstellmechanik ist dabei insbesondere in dem Trägergehäuse der Führungseinheit eingehaust. Dieses Trägergehäuse weist zumindest einen Schlitz und vorzugsweise zwei gegenüberliegende seitliche Längsschlitze auf. Durch den zumindest einen Schlitz ist das innenliegende Schieberelement mit einer Befestigungsschelle zur Befestigung des Schutzschlauches verbunden. Schieberelement und Befestigungsschelle bilden das Befestigungselement oder sind zumindest Teil des Befestigungselements. Bevorzugt weist das Befestigungselement allgemein eine solche Befestigungsschelle zur klemmenden Befestigung des Schutzschlauches auf.

Das Befestigungselement weist insbesondere einen Bügel auf, welcher das Trägergehäuse, speziell einen Trägergehäusedeckel, umgreift und dessen randseitige Bügelarme über die zwei erwähnten seitlichen Längsschlitze in das Trägergehäuseinnere eingreifen und dort mit der Rückstellmechanik, speziell mit dem Schieberelement verbunden sind.

Das bewegliche Sensorbauteil ist bevorzugt mit diesem Bügel fest verbunden.

Ausführungsbeispiele der Erfindung werden nachfolgend anhand der Figuren näher erläutert. Diese zeigen in vereinfachten Darstellungen:
- FIG 1: eine vereinfachte Seitenansicht eines Industrieroboters mit einer Führungsvorrichtung,
- FIG 2: eine perspektivische Ansicht einer Führungsvorrichtung ohne Schlauchpaket mit einer ersten Sensoreinrichtung und mit einer Reflektorfläche am Trägergehäuse,
- FIG 3: eine Aufsicht auf die Führungsvorrichtung gemäß FIG 2, jedoch mit einer weiteren Sensoreinrichtung mit Sensorgehäuse,
- FIG 4: eine Schnittansicht durch das Sensorgehäuse entlang der Schnittlinie IV - IV in FIG 3.

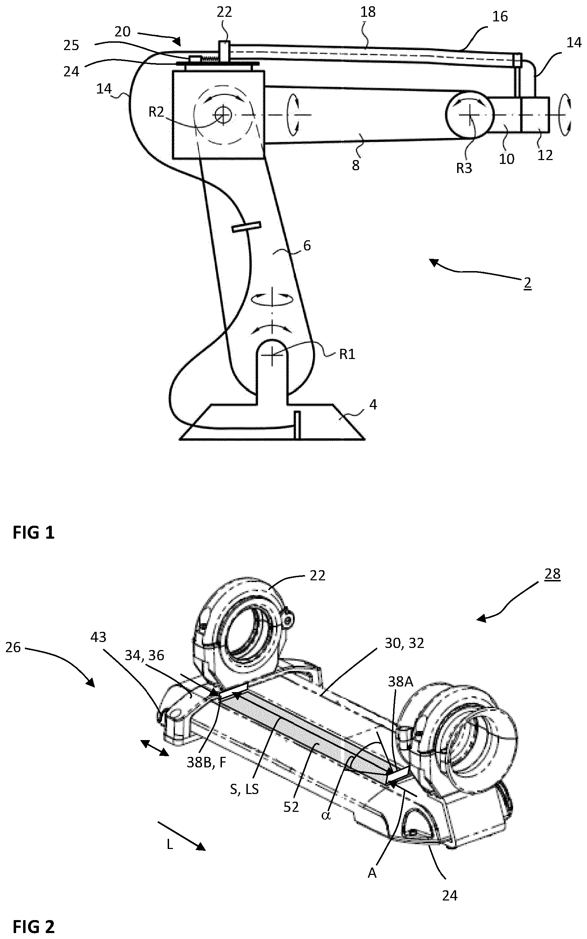

In FIG 1 ist als eine Bearbeitungsmaschine ein Gelenkarmroboter 2 dargestellt, insbesondere in einer Ausführungsvariante als mehrachsiger, insbesondere sechsachsiger Industrieroboter. Dieser weist allgemein eine Basis 4 und ein erstes auch als Schwinge 6 bezeichnetes Segment auf, welche mit der Basis 4 über eine erste Gelenkverbindung R1 verbunden ist. Um diese erste Gelenkverbindung R1 ist die Schwinge 6 um eine horizontale Achse verschwenkbar. Ergänzend ist die Schwinge 6 üblicherweise um eine vertikale Achse relativ zur Basis 4 verschwenkbar. Die Schwinge 6 erstreckt sich in etwa in vertikaler Richtung nach oben. An einer zweiten Gelenkverbindung R2 ist ein zweites Segment, allgemein als Roboterarm 8 bezeichnet, um eine sogenannte "Achse 3" schwenkbeweglich mit der Schwinge 6 verbunden. Weiterhin ist als drittes Segment eine Roboterhand 10 über eine dritte Gelenkverbindung R3 mit dem Roboterarm 8 verbunden. An der Roboterhand 10 ist schließlich ein Bearbeitungswerkzeug 12, wie beispielsweise eine Schweißzange etc. angebracht. Ein derartiger Industrieroboter weist typischerweise mehr als vier oder mehr als fünf und beispielsweise sechs unterschiedliche Bewegungsfreiheitsgrade auf.

Zur Versorgung des Bearbeitungswerkzeugs 12 mit Elektrizität und/oder Fluiden und/oder Datensignalen weist der Gelenkarmroboter 2 ein Versorgungsleitungspaket auf, welches am Roboterarm 2 entlanggeführt und von dort beispielsweise mit der Basis 4 verbunden ist. Das Versorgungsleitungspaket weist zumindest eine Leitung 14 und vorzugsweise mehrere Leitungen 14 auf, die zumindest im Bereich des Roboterarms 8 in einem Schutzschlauch 16 geführt sind. Die Leitungen 14 zusammen mit dem Schutzschlauch 16 werden nachfolgend auch als Schlauchpaket 18 bezeichnet. Häufig ist im Bereich der zweiten Gelenkverbindung R2 eine Trennstelle für das Versorgungsleitungspaket angeordnet und das Schlauchpaket 18 ist als austauschbare Verschleißeinheit bis zu dieser Trennstelle geführt.

Zur Führung des Schlauchpakets und insbesondere zur Ausübung einer Rückholbewegung ist im Bereich der zweiten Gelenkverbindung R2 auf dem Roboterarm 2 eine Führungsvorrichtung 20 befestigt. Zu dieser Führungsvorrichtung 20 ist eine Befestigungsschelle 22 gehörig, in der das Schlauchpaket 18 festgehalten ist, insbesondere formschlüssig, sodass eine von der Führungsvorrichtung 20 ausgeübte Rückstellkraft auf das Schlauchpaket 18 übertragen wird.

Die Führungsvorrichtung 20 weist einen Träger 24 auf, mit dem sie am Gelenkarmroboter 2, insbesondere im Bereich der zweiten Gelenkverbindung R2 befestigt ist. Bei einer Bewegung des Schlauchpakets 18 übt dieses und mit ihr die Befestigungsschelle 22 eine insbesondere lineare Relativbewegung zum Träger 24 aus. Auf dem Träger ist eine Rückstellmechanik 25 angebracht, die auf die Befestigungsschelle 22 eine elastische Rückstellkraft ausübt. Die Befestigungsschelle 22 ist hierzu insbesondere mit einem nicht näher dargestellten Schieberelement verbunden, welches linear verschieblich am Träger 24 befestigt ist.

Für eine frühzeitige Erkennung einer Beschädigung des Schutzschlauches 16 ist die Führungsvorrichtung 20 nunmehr mit einer Sensoreinrichtung 26 ausgestattet, wie sie nachfolgend anhand der Figur 2 bis Figur 4 näher erläutert wird.

Die dargestellte Führungsvorrichtung 20 weist zunächst eine Führungseinheit 28 auf. Diese umfasst ein Trägergehäuse 30, welches bodenseitig den Träger 24 aufweist, an dem eine Gehäuseabdeckung 32 angebracht ist. In dem freien Innenraum ist eine hier nicht näher dargestellte Rückstellmechanik ausgebildet, welche ein elastisches Rückstelleelement, insbesondere ein Federelement aufweist, welches auf ein nicht erkennbares Schieberelement eine elastische Rückstellkraft ausübt. Die Führungseinheit 28 weist ein mit dem Schieberelement verbundenes Befestigungselement 34 auf, welches linear entlang des Trägers 24 verschieblich ist. Dieses Befestigungselement 34 umfasst im Ausführungsbeispiel einen Bügel 36, welcher die Gehäuseabdeckung 32 umgreift und über seitliche Längsschlitze in den Innenraum eingreift und dort mit dem Schieberelement verbunden ist. Am Bügel 36 ist die zuvor bereits erwähnte Befestigungsschelle 22 befestigt, in der im montierten Zustand der Schutzschlauch 16 fixiert ist. Im Ausdrucksbeispiel weist die Führungseinheit 28 an ihrem vorderen Ende noch eine Gleitführung auf, die ortsfest mit dem Träger 24 verbunden ist, und durch die das Schlauchpaket 18 gleitverschieblich geführt ist.

Im Betrieb wird der Schutzschlauch 16 und mit ihm die Befestigungsschelle 22 sowie das gesamte Befestigungselement 34 daher entlang der Führungseinheit 28 zur Ermöglichung der Ausgleichsbewegung linear hin und her verfahren. Der Gelenkarmroboter 2 ist üblicherweise für periodisch wiederkehrende Arbeitsabläufe programmiert, beispielsweise zur Durchführung von mehreren einzelnen Schweißvorgängen an einem Bauteil innerhalb eines Arbeitszyklus. Beim nächsten Bauteil erfolgt der gleiche Arbeitszyklus erneut. Innerhalb eines solchen Arbeitszyklus vollführt der Schutzschlauch 16 und damit das Befestigungselement 34 ein definiertes Bewegungsmuster. Anhand des Bewegungsmusters kann dabei erkannt werden, ob die Führungsvorrichtung 20 und/oder der Gelenkarmroboter 20 einen korrekten Bewegungsablauf entsprechend einer Soll-Vorgabe ausführen.

Mit der in den Fig. 2-4 dargestellten Sensoreinrichtung 26 wird der Bewegungsablauf des Schlauchpakets 18, insbesondere die Relativbewegung des Schutzschlauches 16 relativ zum Träger 24 gemessen und die dabei erfassten Bewegungsdaten ausgewertet.

Hierzu wird die (lineare) Bewegung des Befestigungselements 34, insbesondere des Bügels 36 relativ zum Träger 24 erfasst und ausgewertet.

Die Sensoreinrichtung 26 weist ein erstes ortsfestes Sensorbauteil auf, welches durch einen Ultraschall-Sender 38A gebildet ist oder einen solchen aufweist. Weiterhin weist die Sensoreinrichtung 26 ein zweites, bewegliches Sensorbauteil auf, welches im Ausführungsbeispiel durch einen Reflektor 38B gebildet ist. Dieser ist am Befestigungselement 34 befestigt, wohingegen der Sender 38A am Träger 24 befestigt ist. Mittels der Sensoreinrichtung 26 wird die Relativbewegung des beweglichen Sensorbauteils relativ zum ortsfesten Sensorbauteil gemessen.

Im Betrieb wird ein vom Sender 38A abgegebenes Ultraschall-Sensorsignal S am Reflektor 38B reflektiert und wieder in Richtung zum ersten Sensorbauteil zurückgeworfen, welches insbesondere als kombinierte Sender- und Empfangseinheit ausgebildet ist und daher ergänzend auch einen Ultraschall-Empfänger aufweist. Das empfangene Ultraschall-Sensorsignal S wird geeignet ausgewertet.

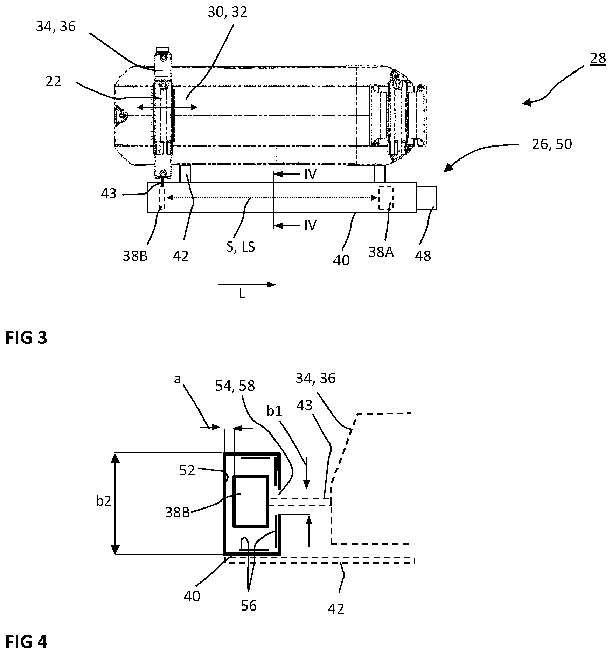

Die aktuelle Position des beweglichen Sensorbauteils 38B wird beispielsweise durch eine Auswertung der Laufzeit des Sensorsignal S ausgewertet. Dies erfolgt insbesondere mithilfe einer Auswerteeinheit 48, die in FIG 3 beispielhaft dargestellt ist. Sie ist insbesondere im Bereich des Senders 38A angebracht und bildet beispielsweise mit diesem eine gemeinsame elektronische Baueinheit aus. Alternativ hierzu besteht auch die Möglichkeit, dass die empfangenen Sensorsignale S an eine übergeordnete Auswerteeinheit weitergeleitet werden.

Der Sender 38A und der Reflektor 38B sind in einer Längsrichtung L einander gegenüberliegend angeordnet. Eine Verbindungslinie zwischen diesen Bauteilen definiert insofern eine lineare Signalstrecke LS.

Der Sender 38A emittiert das Ultraschall-Sensorsignal S unter einem Abstrahlwinkel α, welcher beispielsweise bei 30° liegt.

Aus Bauraumgründen ist der Reflektor 38B klein gehalten und weist eine Sensorfläche F auf, die bevorzugt maximal 10 cm² beträgt. Beispielsweise weist der Reflektor 38B eine Sensorfläche F von 4 cm x 2 cm auf. Die Abmessungen der Sensorfläche F sind insbesondere identisch mit den Abmessungen des Reflektors 38B, welcher bevorzugt als eine metallische Platte oder als eine Platte aus einem Polymer, ausgebildet ist.

FIG 2 zeigt einen Zustand, bei dem das Befestigungselement 34 und damit die Befestigungsschelle 22 sich in einem maximal ausgefahrenen Zustand befindet. Korrespondierend hierzu weisen der Sender 38A und der Reflektor 38B in diesem Zustand einen maximalen Abstand A zueinander auf, welcher vorzugsweise bei maximal 40 cm liegt.

Der Reflektor 38B ist vorzugsweise allgemein unmittelbar auf der Höhe des Befestigungselements 34 angeordnet. Der Sender 38A ist am gegenüberliegenden Endbereich des Trägers 24 angebracht.

Durch den großen Abstrahlwinkel α und der nur geringen Reflektorfläche F besteht die Gefahr, dass ein Anteil des Sensorsignals S nicht reflektiert wird bzw. den Empfänger nicht erreicht und damit die Auswertung erschwert wird.

Um die Zuverlässigkeit der Messung zu erhöhen ist nunmehr eine Reflektorfläche 52 vorgesehen, die neben der Signalstrecke LS angebracht ist. Durch diese Reflektorfläche 52 wird zumindest ein Teil des Sensorsignals S wieder reflektiert und trifft somit auf den Reflektor 38B und kann zurückgeworfen werden.

Im Ausführungsbeispiel der FIG 2 ist die Reflektorfläche 52 durch einen Teilbereich der Außenwand des Trägergehäuses 30, speziell der Gehäuseabdeckung 32 gebildet, wie dies durch die grau eingefärbte Fläche dargestellt ist. Bevorzugt ist die Reflektorfläche 52 auf der Oberseite der Gehäuseabdeckung 32 und damit unterhalb des Schlauchpakets 18 angeordnet. Bei der Reflektorfläche 52 handelt es sich insbesondere um eine spezielle Oberflächenbeschichtung oder ein Oberflächenmaterial, welches für die Reflexion von Ultraschall-Signalen geeignet ist. Die Reflektorfläche 52 unterscheidet sich vorzugsweise von den übrigen Außenflächenbereichen des Trägergehäuses 30. Der Reflektor 38B ist beispielsweise insbesondere unmittelbar an dem Bügel 36 oder der Befestigungsschelle 22 angebracht. Der Sender 38A ist beispielsweise auf der Gehäuseabdeckung 32 befestigt. Die Befestigung von Reflektor 38B und / oder Sender 38A erfolgt beispielsweise form- kraft- oder bevorzugt stoffschlüssig beispielsweise durch Kleben oder Verschweißen.

Gemäß der Fig. 3 umfasst die Sensoreinrichtung 26 ein Sensorgehäuse 40, welches neben der Führungseinheit 28 angeordnet ist und insbesondere an dieser befestigt ist. Innerhalb des Sensorgehäuses 40 sind der Sender 38A sowie der Reflektor 38B angeordnet. Über Montageelemente 42 ist das Sensorgehäuse 40 und insbesondere die gesamte Sensoreinrichtung 26 an der Führungseinheit 28 befestigt. In einem alternativen Ausführungsbeispiel ist auch eine Befestigung an einem Bauteil des Gelenkarmroboters 2, wie beispielsweise am Roboterarm 8 möglich.

Das im Sensorgehäuse 40 angeordnete bewegliche Sensorbauteil 38 ist über ein aus dem Sensorgehäuse 40 heraustretendes Verbindungselement 43 mit dem Befestigungselement 34 und speziell mit den Bügel 36 verbunden ist. Das Verbindungselement 43 übt daher im Betrieb eine Relativbewegung zum Sensorgehäuse 40 aus. Dieses weist hierzu an einer Seitenwand bevorzugt einen in Längsrichtung L verlaufenden Öffnungsschlitz auf, entlang dessen das Verbindungselement 43 verfahren kann.

Wie insbesondere anhand der FIG 4 zu erkennen ist, weist das Sensorgehäuse 40 eine Innenseite auf, welche die Reflektorfläche 52 bildet. Bei dieser handelt es sich beispielsweise um eine spezielle Oberflächenbehandlung oder Oberflächenbeschichtung. Im Ausführungsbeispiel ist die Reflektorfläche 52 unmittelbar durch die Seitenwand des Sensorgehäuses 40 gebildet. Bei diesem handelt es sich insbesondere um ein Metallgehäuse, insbesondere aus Aluminium.

Die Seitenwand mit der Reflektorfläche 52 ist bevorzugt verschieden von den übrigen inneren Oberflächen-Bereichen des Sensorgehäuses 40.

Hervorzuheben ist, dass das Sensorgehäuse 40 wie in der Fig. 4 ersichtlich, gegenüberliegend zu der Reflektorfläche 52 offen ist, also eine sich in Längsrichtung L erstreckende Öffnung 54 aufweist, die sich insbesondere über den gesamten maximalen Abstand A erstreckt. Die Öffnung 54 weist dabei eine Öffnungsbreite b1 auf, die vorzugsweise zumindest 10 % und zumindest 20 % und vorzugsweise zumindest 50 % der Breite b2 des Sensorgehäuse 40 beträgt.

Bevorzugt ist die Öffnungsbreite b1 zumindest größer 15 mm oder zumindest größer 25 mm.

Ergänzend oder alternativ besteht auch die Möglichkeit, dass Innenflächen-Bereiche angrenzend und / oder gegenüberliegend zu der Reflektorfläche 52 eine absorbierende Oberfläche 56 aufweisen. Dies wird bevorzugt dadurch erreicht, dass eine geeignete Beschichtung oder ein geeignetes Material beispielsweise ein Vlies aufgebracht wird, sodass also die entsprechenden Teilbereiche mit einem Ultraschall absorbierenden Material quasi verkleidet sind.

Im Ausführungsbeispiel weist das Sensorgehäuse 40 eine rechteckförmige Querschnittskontur auf. Bevorzugt handelt es sich bei der Reflektorfläche 52 um eine Langseite des rechteckförmigen Sensorgehäuses 40 und / oder der Reflektor 38B ist ebenfalls rechteckförmig ausgebildet und dessen Langseite ist gegenüberliegend zur Reflektorfläche 52 angeordnet, was sich positiv auf die Signalreflexion auswirkt.

In FIG 4 sind gestrichelt und abschnittsweise das Montageelement 42, das Befestigungselement 34 bzw. der Bügel 36 sowie das Verbindungselement 43 angedeutet. Gut zu erkennen ist hierbei auch, dass das Verbindungselement 43 durch die zuvor beschriebene Öffnung 54 hindurchgreift und zu dem Reflektor 38B geführt ist und diesen hält.

Hervorzuheben ist, dass zwischen dem Verbindungselement 43 und der Öffnung 54, genauer einem Öffnungsrand, ein Öffnungsspalt 58 ausgebildet ist. Insgesamt beträgt die Öffnungsbreite b1 bevorzugt ein Vielfaches einer Dicke des Verbindungselements 43, so dass ein ausreichend großer Öffnungsspalt 58 ausgebildet ist, um die gewünschten Effekte für die Signalausbreitung zu erreichen. Der Öffnungsspalt 58, also die Differenz zwischen Dicke des Verbindungselements 43 und der Öffnungsbreite b1, beträgt insbesondere mehr als 15 mm, bevorzugt mehr als 20 mm oder auch mehr als 30 mm. Die Gehäusebreite b2 liegt vorzugsweise im Bereich zwischen 4 cm und 8 cm.

Im Hinblick auf ein gute Reflexion an der Reflexionsfläche 52 ist ein Abstand a zwischen dem Reflektor 38B und der Reflektorfläche 52 möglichst klein gewählt. Bevorzugt liegt dieser Abstand a lediglich im Bereich von wenigen mm und ist insbesondere kleiner als 8mm, vorzugsweise kleiner als 5mm und insbesondere kleiner als 3mm. Der Mindestabstand entspricht einem für die Verfahrbarkeit erforderlichem Toleranzspalt zwischen dem Reflektor und der Innenwand. Bevorzugt entspricht der Abstand a einem solchen minimalen Toleranzspalt.

Die Sensoreinrichtung 26 ist insbesondere zur Nachrüstung auch an bestehenden Führungseinheiten 28 ausgebildet. Hierzu ist insgesamt ein Nachrüstset 50 vorgesehen, welches nachträglich an eine bestehende Führungseinheit 28 montiert werden kann. Dieses Nachrüstset 50 weist insbesondere die beiden Sensorbauteile 38A, 38B, vorzugsweise die Auswerteeinheit 48 und/oder zumindest eine Kommunikationseinheit zur Übermittlung von Datensignalen an eine entfernte Auswerteeinheit auf. Weiterhin gehören die Montageelemente 42 vorzugsweise zum Nachrüstset 50. Bei der Ausführungsvariante mit dem Sensorgehäuse 40 ist dieses ein Teil des Nachrüstsets. Bevorzugt weist das Nachrüstset 50 eine aus diesen Elementen gebildete gemeinsame Montagebaueinheit auf oder ist eine solche Montagebaueinheit. Diese besteht insbesondere aus dem Sensorgehäuse 40 und den Montageelementen 42, wobei innerhalb des Sensorgehäuse 40 bereits die Sensorbauteile 38A, 38B vorkonfektioniert enthalten sind. Die Auswerteeinheit 48 ist in einer Variante ebenfalls Teil dieser Montagebaueinheit. In diesem Fall ist daher lediglich noch die Montage an der Führungseinheit 28 erforderlich.

### Bezugszeichenliste

- 2: Gelenkarmroboter
- 4: Basis
- 6: Schwinge
- 8: Roboterarm
- 10: Roboterhand
- 12: Bearbeitungswerkzeug
- 14: Leitung
- 16: Schutzschlauch
- 18: Schlauchpaket
- 20: Führungsvorrichtung
- 22: Befestigungsschelle
- 24: Träger
- 25: Rückstellmechanik
- 26: Sensoreinrichtung
- 28: Führungseinheit
- 30: Trägergehäuse
- 32: Gehäuseabdeckung
- 34: Befestigungselement
- 36: Bügel
- 38A: Sensor
- 38B: Reflektor
- 40: Sensorgehäuse
- 42: Montageelement
- 43: Verbindungselement
- 48: Auswerteeinheit
- 50: Nachrüstset
- 52: Reflektorfläche
- 54: Öffnung
- 56: absorbierende Oberfläche
- 58: Öffnungsspalt
- L: Längsrichtung
- LS: lineare Signalstrecke
- α: Abstrahlwinkel
- F: Sensorfläche
- b1: Öffnungsbreite
- b2: Breite des Sensorgehäuses
- R1: 1. Gelenkverbindung
- R2: 2. Gelenkverbindung
- R3: 3. Gelenkverbindung
- S: Sensorsignal
- A: Abstand
- a: Abstand zwischen Reflektorfläche und Reflektor

## Patentansprüche

1. Führungsvorrichtung (20) zur Führung von zumindest einer in einem Schutzschlauch (16) einliegenden Leitung (14), insbesondere eines Gelenkarmroboters (2), mit einer Führungseinheit (28), wobei die Führungseinheit (28) einen ortsfesten Träger (24), sowie ein Befestigungselement (34) zur Befestigung des Schutzschlauches (16) aufweist, wobei das Befestigungselement (34) entlang des Trägers (24) in einer Längsrichtung (L) verfahrbar ist, um eine Ausgleichsbewegung des Schutzschlauches (16) sowie der darin geführten zumindest einen Leitung (14) zu ermöglichen, wobei die Führungsvorrichtung (20) eine Sensoreinrichtung (26) zur Messung der Bewegung des Befestigungselements (34) relativ zum Träger (24) aufweist, **dadurch gekennzeichnet, dass** die Sensoreinrichtung (26) einen als Ultraschall-Sender ausgebildeten Sender (38A) als ein erstes Sensorbauteil zur Abgabe eines Sensorsignals (S) sowie ein in Längsrichtung (L) gegenüberliegendes zweites Sensorbauteil (38B) aufweist, mit einer sich in Längsrichtung erstreckenden Signalstrecke (LS) zwischen den beiden Sensorbauteilen (38A, 38B), wobei seitlich neben der Signalstrecke (LS) eine Reflektorfläche (52) für das Sensorsignal (S) angeordnet ist, so dass im Betrieb zumindest ein Teil des Sensorsignals (S) auf dem Weg vom Sender (38A) zum zweiten Sensorbauteil (38B) an der Reflektorfläche (52) reflektiert wird.

2. Führungsvorrichtung (20) nach dem vorhergehenden Anspruch **dadurch gekennzeichnet, dass** der Sender (38A) mit dem ortsfesten Träger (24) verbunden ist und das zweite Sensorbauteil als ein Reflektor (38B) für das Sensorsignal (S) ausgebildet und mit dem Befestigungselement (34) verbunden ist.

3. Führungsvorrichtung (20) nach einem der vorhergehenden Ansprüche, **dadurch gekennzeichnet, dass** gegenüberliegend zur Reflektorfläche (52) ein nicht reflektierender Bereich ausgebildet ist, derart, dass ein an der Reflektorfläche (52) reflektierter Teil des Sensorsignals (S) nicht mehrfach reflektiert wird.

4. Führungsvorrichtung (20) nach einem der vorhergehenden Ansprüche, **dadurch gekennzeichnet, dass** die Sensoreinrichtung (20) innerhalb eines Sensorgehäuses (40) integriert ist, welches neben dem Träger (24) angeordnet ist und eine Innenseite aufweist, die die Reflektorfläche (52) ausbildet.

5. Führungsvorrichtung (20) nach dem vorhergehenden Anspruch, **dadurch gekennzeichnet, dass** das Sensorgehäuse an der der Reflektorfläche (52) gegenüberliegenden Seite zumindest eine Öffnung (54) aufweist oder komplett offen ist, wobei die Öffnung (54) bevorzugt eine Öffnungsbreite (b1).
- von zumindest 10% und insbesondere von zumindest 20% einer Breite (b2) des Sensorgehäuses (40) aufweist, und / oder
- von zumindest 15 mm oder von zumindest 25 mm aufweist.

6. Führungsvorrichtung (20) nach dem vorhergehenden Anspruch, bei dem das zweite Sensorbauteil (38B) über ein Verbindungselement (43) mit dem Befestigungselement (34) verbunden ist und das Verbindungselement (43) durch die Öffnung (54) hindurchgeführt ist, wobei die Öffnungsbreite (b1) größer als eine Dicke des Verbindungselements (43) gewählt ist, so dass zwischen der Öffnung (54) und dem Verbindungselement ein freier Öffnungsspalt (58) ausgebildet ist, wobei die Öffnungsbreite (b1) bevorzugt ein Mehrfaches der Dicke des Verbindungselements (43) entspricht und / oder der Öffnungsspalt (58) bevorzugt größer als 15mm ist.

7. Führungsvorrichtung (20) nach einem der Ansprüche 4 bis 6, bei der ein Abstand (a) des zweiten Sensorbauteils (38B) zur Reflektorfläche (52) kleiner als 8 mm, insbesondere kleiner als 5 mm und bevorzugt kleiner als 3 mm ist.

8. Führungsvorrichtung (20) nach einem der Ansprüche 4 bis 7, **dadurch gekennzeichnet, dass** das Sensorgehäuse (40) zumindest an der der Reflektorfläche (52) gegenüberliegenden Seite eine das Sensorsignal (S) absorbierende Oberfläche (56) aufweist.

9. Führungsvorrichtung (20) nach einem der Ansprüche 1 bis 3, **dadurch gekennzeichnet, dass** der Träger (24) ein Trägergehäuse (30) aufweist oder mit diesem verbindbar ist und dass die Sensoreinrichtung (26) neben dem Trägergehäuse (30) angeordnet ist, wobei eine Außenwand des Trägergehäuses (30) die Reflektorfläche (52) aufweist.

10. Führungsvorrichtung (20) nach einem der vorhergehenden Ansprüche, **dadurch gekennzeichnet, dass** der Sender (38A) einen Abstrahlwinkel (α) für das Sensorsignal (S) aufweist, welcher größer-gleich 20° oder größer-gleich 30° ist, vorzugsweise maximal 50° beträgt und welcher insbesondere im Bereich zwischen 25° und 35° liegt.

11. Führungsvorrichtung (20) nach einem der vorhergehenden Ansprüche, bei der der Abstand zwischen dem Sender (38A) und dem zweiten Sensorbauteil (38B) maximal 45 cm, bevorzugt maximal 40 cm und weiter bevorzugt maximal 35 cm beträgt.

12. Führungsvorrichtung (20) nach einem der vorhergehenden Ansprüche, **dadurch gekennzeichnet, dass** das zweite Sensorbauteil (38B) eine Sensorfläche (F) aufweist, welche kleiner 25 cm²,insbesondere kleiner 15 cm² oder kleiner 10 cm² ist.

13. Führungsvorrichtung (20) nach dem vorhergehenden Anspruch, **dadurch gekennzeichnet, dass** die Führungsvorrichtung (20) eine Auswerteeinheit (48) aufweist, die zur Auswertung von bei der Messung erfassten Bewegungsdaten (M) im Hinblick auf zumindest einen der nachfolgenden Aspekte ausgewertet werden:
a. eine Beschädigung des Schutzschlauches (16),
b. eine Störung im Bewegungsablauf der Führungseinheit (28),
c. eine Änderung eines Bewegungsmusters der Führungseinheit (28).

14. Nachrüstset (50) zur Ausbildung einer Führungsvorrichtung (20) nach einem der vorhergehenden Ansprüche, wobei das Nachrüstset eine Sensoreinrichtung (26) aufweist, die an der Führungseinheit (28) montierbar ist und die zur Messung der Bewegung eines Schutzschlauches (16) der Führungseinheit (28) ausgebildet ist.

15. Verfahren zur Überwachung der Bewegung eines Schutzschlauches (16) einer Führungsvorrichtung (20), die zum Führen von zumindest einer im Schutzschlauch (16) einliegenden Leitung (14) dient, wobei die Führungsvorrichtung (20) eine Führungseinheit (28) mit einem Befestigungselement (34) zur Befestigung des Schutzschlauches (16) sowie mit einem ortsfesten Träger (24) aufweist, wobei das Befestigungselement (34) entlang des Trägers (24) in einer Längsrichtung (L) verfahren wird, um eine Ausgleichsbewegung
des Schutzschlauches (16) sowie der darin geführten zumindest einen Leitung (14) zu ermöglichen, wobei die Führungsvorrichtung (20) eine Sensoreinrichtung (26) zur Messung der Bewegung des Befestigungselements (34) relativ zum Träger (24) aufweist, **dadurch gekennzeichnet, dass** die Sensoreinrichtung (26) einen als Ultraschall-Sender ausgebildeten Sender (38A) als ein erstes Sensorbauteil zur Abgabe eines Sensorsignals (S) sowie ein in Längsrichtung (L) gegenüberliegendes zweites Sensorbauteil (38B) aufweist, mit einer sich in Längsrichtung (L) erstreckenden Signalstrecke (LS) zwischen den beiden Sensorbauteilen (38A, 38B), wobei seitlich neben der Signalstrecke (LS) eine Reflektorfläche (52) für das Sensorsignal (S) angeordnet ist, so dass zumindest ein Teil des Sensorsignals (S) auf dem Weg vom Sender (38A) zum zweiten Sensorbauteil (38B) an der Reflektorfläche (52) reflektiert wird.

## Claims

1. Guide apparatus (20) for guiding at least one cable (14), in particular of an articulated-arm robot (2), which is placed in a protective hose (16), having a guide unit (28), wherein the guide unit (28) has a static support (24) and a fastening element (34) for fastening the protective hose (16), wherein the fastening element (34) can travel along the support (24) in a longitudinal direction (L) in order to enable a compensating movement of the protective hose (16) and of the at least one cable (14) placed therein, wherein the guide apparatus (20) has a sensor device (26) for measuring the movement of the fastening element (34) relative to the support (24), **characterized in that** the sensor device (26) has a transmitter (38A), configured as an ultrasound transmitter, as a first sensor component for delivering a sensor signal (S), as well as a second sensor component (38B) which lies opposite in the longitudinal direction (L), with a signal path (LS) extending in the longitudinal direction between the two sensor components (38A, 38B), wherein a reflector surface (52) for the sensor signal (S) is arranged laterally next to the signal path (LS) so that at least a part of the sensor signal (S) is reflected at the reflector surface (52) on its way from the transmitter (38A) to the second sensor component (38B) during operation.

2. Guide apparatus (20) according to the preceding claim, **characterized in that** the transmitter (38A) is connected to the static support (24), and the second sensor component is configured as a reflector (38B) for the sensor signal (S) and is connected to the fastening element (34).

3. Guide apparatus (20) according to either of the preceding claims, **characterized in that** a non-reflective region is formed opposite the reflector surface (52) in such a way that a part of the sensor signal (S) reflected at the reflector surface (52) is not reflected multiple times.

4. Guide apparatus (20) according to any one of the preceding claims, **characterized in that** the sensor device (20) is integrated inside a sensor housing (40), which is arranged next to the support (24) and has an inner side that forms the reflector surface (52).

5. Guide apparatus (20) according to the preceding claim, **characterized in that** the sensor housing has at least one opening (54), or is completely open, on the opposite side from the reflector surface (52), wherein the opening (54) preferably has an opening width (b1)
- of at least 10%, and in particular at least 20%, of a width (b2) of the sensor housing (40), and/or
- of at least 15 mm or at least 25 mm.

6. Guide apparatus (20) according to the preceding claim, wherein the second sensor component (38B) is connected to the fastening element (34) via a connecting element (43) and the connecting element (43) is fed through the opening (54), the opening width (b1) being selected to be greater than a thickness of the connecting element (43), so that a free opening gap (58) is formed between the opening (54) and the connecting element, the opening width (b1) preferentially corresponding to a multiple of the thickness of the connecting element (43) and/or the opening gap (58) preferentially being more than 15 mm.

7. Guide apparatus (20) according to any one of Claims 4 to 6, wherein a distance (a) of the second sensor component (38B) from the reflector surface (52) is less than 8 mm, in particular less than 5 mm and preferentially less than 3 mm.

8. Guide apparatus (20) according to any one of Claims 4 to 7, **characterized in that** the sensor housing (40) has, at least on the opposite side from the reflector surface (52), a surface (56) that absorbs the sensor signal (S).

9. Guide apparatus (20) according to any one of Claims 1 to 3, **characterized in that** the support (24) has, or can be connected to, a support housing (30), and **in that** the sensor device (26) is arranged next to the support housing (30), an outer wall of the support housing (30) having the reflector surface (52).

10. Guide apparatus (20) according to any one of the preceding claims, **characterized in that** the transmitter (38A) has an emission angle (α) for the sensor signal (S) which is greater than or equal to 20° or greater than or equal to 30°, preferably at most 50°, and which in particular lies in the range of between 25° and 35°.

11. Guide apparatus (20) according to any one of the preceding claims, wherein the distance between the transmitter (38A) and the second sensor component (38B) is at most 45 cm, preferentially at most 40 cm and more preferentially at most 35 cm.

12. Guide apparatus (20) according to any one of the preceding claims, **characterized in that** the second sensor component (38B) has a sensor area (F) which is less than 25 cm², in particular less than 15 cm² or less than 10 cm².

13. Guide apparatus (20) according to the preceding claim, **characterized in that** the guide apparatus (20) has an evaluation unit (48), which are evaluated to evaluate movement data (M) recorded during the measurement in respect of at least one of the following aspects:
a. damage to the protective hose (16),
b. interference in the movement sequence of the guide unit (28),
c. a change of a movement pattern of the guide unit (28).

14. Retrofit kit (50) for forming a guide apparatus (20) according to any one of the preceding claims, wherein the retrofit kit has a sensor device (26) which can be mounted on the guide unit (28) and is configured to measure the movement of a protective hose (16) of the guide unit (28).

15. Method for monitoring the movement of a protective hose (16) of a guide apparatus (20) that serves to guide at least one cable (14) which is placed in the protective hose (16), wherein the guide apparatus (20) has a guide unit (28) with a fastening element (34) for fastening the protective hose (16) and with a static support (24), wherein the fastening element (34) can travel along the support (24) in a longitudinal direction (L) in order to enable a compensating movement of the protective hose (16) and of the at least one cable (14) placed therein, wherein the guide apparatus (20) has a sensor device (26) for measuring the movement of the fastening element (34) relative to the support (24), **characterized in that** the sensor device (26) has a transmitter (38A), configured as an ultrasound transmitter, as a first sensor component for delivering a sensor signal (S), as well as a second sensor component (38B) which lies opposite in the longitudinal direction (L), with a signal path (LS) extending in the longitudinal direction (L) between the two sensor components (38A, 38B), wherein a reflector surface (52) for the sensor signal (S) is arranged laterally next to the signal path (LS) so that at least a part of the sensor signal (S) is reflected at the reflector surface (52) on its way from the transmitter (38A) to the second sensor component (38B).

## Revendications

1. Dispositif de guidage (20) pour le guidage d'au moins une conduite (14) logée dans une gaine de protection (16), en particulier d'un robot à bras articulé (2), comprenant une unité de guidage (28), laquelle unité de guidage (28) présente un support (24) fixe ainsi qu'un élément de fixation (34) pour la fixation de la gaine de protection (16), l'élément de fixation (34) étant mobile le long du support (24) dans une direction longitudinale (L) afin de permettre un mouvement de compensation de la gaine de protection (16) ainsi que de l'au moins une conduite (14) guidée dans celle-ci, le dispositif de guidage (20) présentant un système de capteur (26) pour mesurer le mouvement de l'élément de fixation (34) par rapport au support (24), **caractérisé en ce que** le système de capteur (26) présente un émetteur (38A) conçu comme un émetteur à ultrasons en tant que premier composant de capteur pour l'émission d'un signal de capteur (S), ainsi qu'un deuxième composant de capteur (38B) opposé dans la direction longitudinale (L), avec un trajet de signal (LS) s'étendant dans la direction longitudinale entre les deux composants de capteur (38A, 38B), une surface réfléchissante (52) pour le signal de capteur (S) étant disposée latéralement à côté du trajet de signal (LS), de sorte que, lors du fonctionnement, au moins une partie du signal de capteur (S) est réfléchie sur la surface réfléchissante (52) sur le trajet allant de l'émetteur (38A) vers le deuxième composant de capteur (38B).

2. Dispositif de guidage (20) selon la revendication précédente, **caractérisé en ce que** l'émetteur (38A) est relié au support (24) fixe et **en ce que** le deuxième composant de capteur est conçu comme un réflecteur (38B) pour le signal de capteur (S) et est relié à l'élément de fixation (34).

3. Dispositif de guidage (20) selon l'une des revendications précédentes, **caractérisé en ce que**, à l'opposé de la surface réfléchissante (52), est formée une zone non réfléchissante, de telle sorte qu'une partie du signal de capteur (S) réfléchie sur la surface réfléchissante (52) ne soit pas réfléchie plusieurs fois.

4. Dispositif de guidage (20) selon l'une des revendications précédentes, **caractérisé en ce que** le système de capteur (20) est intégré à l'intérieur d'un boîtier de capteur (40) qui est disposé à côté du support (24) et présente une face intérieure qui forme la surface réfléchissante (52).

5. Dispositif de guidage (20) selon la revendication précédente, **caractérisé en ce que** le boîtier de capteur présente, sur le côté opposé à la surface réfléchissante (52), au moins une ouverture (54) ou est complètement ouvert, l'ouverture (54) présentant de préférence une largeur d'ouverture (b1)
- d'au moins 10 % et en particulier d'au moins 20 % d'une largeur (b2) du boîtier de capteur (40), et/ou
- d'au moins 15 mm ou d'au moins 25 mm.

6. Dispositif de guidage (20) selon la revendication précédente, dans lequel le deuxième composant de capteur (38B) est relié à l'élément de fixation (34) par l'intermédiaire d'un élément de liaison (43) et en ce que l'élément de liaison (43) passe à travers l'ouverture (54), la largeur d'ouverture (b1) étant choisie supérieure à une épaisseur de l'élément de liaison (43), de sorte qu'un interstice d'ouverture libre (58) est formé entre l'ouverture (54) et l'élément de liaison, la largeur d'ouverture (b1) correspondant de préférence à un multiple de l'épaisseur de l'élément de liaison (43) et/ou l'interstice d'ouverture (58) étant de préférence supérieur à 15 mm.

7. Dispositif de guidage (20) selon l'une des revendications 4 à 6, dans lequel une distance (a) du deuxième composant de capteur (38B) par rapport à la surface réfléchissante (52) est inférieure à 8 mm, en particulier inférieure à 5 mm et de préférence inférieure à 3 mm.

8. Dispositif de guidage (20) selon l'une des revendications 4 à 7, **caractérisé en ce que** le boîtier de capteur (40) présente, au moins sur le côté opposé à la surface réfléchissante (52), une surface (56) absorbant le signal de capteur (S).

9. Dispositif de guidage (20) selon l'une des revendications 1 à 3, **caractérisé en ce que** le support (24) présente un boîtier de support (30) ou peut être relié à celui-ci, et **en ce que** le système de capteur (26) est disposé à côté du boîtier de support (30), une paroi extérieure du boîtier de support (30) présentant la surface réfléchissante (52).

10. Dispositif de guidage (20) selon l'une des revendications précédentes, **caractérisé en ce que** l'émetteur (38A) présente un angle d'émission (α) pour le signal de capteur (S) qui est supérieur ou égal à 20° ou supérieur ou égal à 30°, est de préférence au maximum de 50°, et qui se situe en particulier dans la plage comprise entre 25° et 35°.

11. Dispositif de guidage (20) selon l'une des revendications précédentes, dans lequel la distance entre l'émetteur (38A) et le deuxième composant de capteur (38B) est au maximum de 45 cm, de préférence au maximum de 40 cm et plus préférablement au maximum de 35 cm.

12. Dispositif de guidage (20) selon l'une des revendications précédentes, **caractérisé en ce que** le deuxième composant de capteur (38B) présente une surface de capteur (F) qui est inférieure à 25 cm², en particulier inférieure à 15 cm² ou inférieure à 10 cm².

13. Dispositif de guidage (20) selon la revendication précédente, **caractérisé en ce que** le dispositif de guidage (20) présente une unité d'évaluation (48) qui sont évaluées pour l'évaluation de données de mouvement (M) détectées lors de la mesure au regard d'au moins l'un des aspects suivants :
a. un endommagement de la gaine de protection (16),
b. une perturbation dans le déroulement du mouvement de l'unité de guidage (28),
c. une modification d'un motif de mouvement de l'unité de guidage (28).

14. Kit de mise à niveau (50) pour la formation d'un dispositif de guidage (20) selon l'une des revendications précédentes, dans lequel le kit de mise à niveau présente un système de capteur (26) qui peut être monté sur l'unité de guidage (28) et qui est conçu pour mesurer le mouvement d'une gaine de protection (16) de l'unité de guidage (28).

15. Procédé pour la surveillance du mouvement d'une gaine de protection (16) d'un dispositif de guidage (20) servant au guidage d'au moins une conduite (14) logée dans la gaine de protection (16), le dispositif de guidage (20) présentant une unité de guidage (28) dotée d'un élément de fixation (34) pour la fixation de la gaine de protection (16) ainsi que d'un support (24) fixe, l'élément de fixation (34) étant déplacé le long du support (24) dans une direction longitudinale (L) afin de permettre un mouvement de compensation de la gaine de protection (16) ainsi que de l'au moins une conduite (14) guidée dans celle-ci, le dispositif de guidage (20) présentant un système de capteur (26) pour mesurer le mouvement de l'élément de fixation (34) par rapport au support (24), **caractérisé en ce que** le système de capteur (26) présente un émetteur (38A) conçu comme un émetteur à ultrasons en tant que premier composant de capteur pour l'émission d'un signal de capteur (S), ainsi qu'un deuxième composant de capteur (38B) opposé dans la direction longitudinale (L), avec un trajet de signal (LS) s'étendant dans la direction longitudinale (L) entre les deux composants de capteur (38A, 38B), une surface réfléchissante (52) pour le signal de capteur (S) étant disposée latéralement à côté du trajet de signal (LS), de sorte qu'au moins une partie du signal de capteur (S) est réfléchie sur la surface réfléchissante (52) sur le trajet allant de l'émetteur (38A) vers le deuxième composant de capteur (38B).
